# EUROPÄISCHE PATENTANMELDUNG

(11) **EP 1 133 164 A2**
(43) Veröffentlichungstag der Anmeldung: **12.09.2001**
(21) Anmeldenummer: 00128462.9
(22) Anmeldetag: 23.12.2000
(51) Int. Cl.: H04N 1/50

(54) **Verfahren zum Erzeugen von Rasterdaten und Rastererzeugungssystem**

(30) Priorität: 14.01.2000 DE 10001211
(71) Anmelder: Heidelberger Druckmaschinen Aktiengesellschaft, 69115 Heidelberg (DE)
(72) Erfinder: Kaiser, Michael, 69118 Heidelberg (DE)
(74) Vertreter: Pudimat, Roland

(57) **Zusammenfassung**

Zur Beschleunigung der Rastererzeugung für eine Druckmaschine mit Bebilderungseinheiten (4) wird ein Rastererzeugungssystem vorgeschlagen, bei dem eine Vorverarbeitungseinheit (11,12) Rohbilddaten in eine Mehrzahl von jeweils einer Druckfarbe entsprechenden Teilbildern zerlegt und die Teilbilder an eine Mehrzahl von Rasterprozessoren (13) entsprechend der Anzahl der zu druckenden Farben ausgibt, wobei die Rasterprozessoren (13) die Teilbilder zeitgleich für die Ausgabe an jeweils eine der Bebilderungseinheiten (4) zu Rasterdaten verarbeiten.

## Beschreibung

Die vorliegende Erfindung betrifft ein Verfahren zur Erzeugung von Rasterdaten für Bebilderungseinheiten einer Druckmaschine.

Druckmaschinen mit Bebilderungseinheiten sind an sich bekannt. Derartige Bebilderungseinheiten erzeugen durch Abtasten mit einem Laserstrahl ein Druckbild auf einer Druckplatte der Druckmaschine, wobei Lage und Größe der Rasterpunkte des Druckbildes durch Rasterdaten gesteuert werden, mit denen der Laserstrahl im Laufe einer Abtastbewegung über die Oberfläche der Druckplatte hinweg moduliert wird.

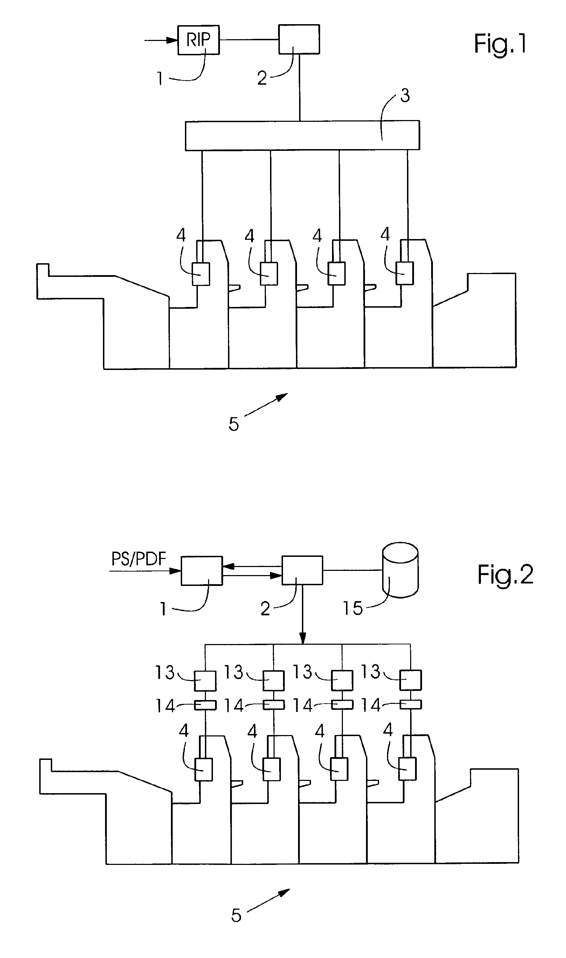

Mit Hilfe derartiger Bebilderungseinheiten wird im Vergleich zur herkömmlichen Folienbelichtungstechnik eine Mehrzahl von Bearbeitungsstufen auf dem Weg von einer Bildvorlage zum fertigen Druck eingespart, so dass wechselnde Druckaufträge zügig und kostengünstig abgearbeitet werden können. Dennoch zerfällt auch bei Verwendung solcher Bebilderungseinheiten der Verarbeitungsprozess von der Bildvorlage zum fertigen Druck in eine Mehrzahl von nacheinander auszuführenden Bearbeitungsstufen, die zum Teil zeitaufwendig sind. Bei einem herkömmlichen Rastererzeugungssystem, wie in Figur 1 dargestellt, durchlaufen Rohbilddaten zunächst einen Rasterprozessor (Raster Image Processor, RIP), der diese unter gleichzeitiger Durchführung aller erforderlichen Kalibrierungsoperationen in eine Mehrzahl von Teilbildem, jeweils ein Teilbild für jede zu druckende Farbe, umrechnet. Diese Teilbilder werden von einer Verwaltungseinheit 2 jeweils in eine Pufferspeichereinheit 3 übertragen. Nachdem der Rasterprozessor 1 die Bildvorlage vollständig verarbeitet hat und alle benötigen Teilbilder in der Pufferspeichereinheit 3 vorhanden sind, können sie von dort an die Bebilderungseinheiten 4 einer schematisch dargestellten Druckmaschine 5 übertragen werden. Die Pufferung der Rasterdaten in der Einheit 3 ist notwendig, da die Bebilderungseinheiten 4 jeweils mit einer bauartbedingt vorgegebenen Datenrate unterbrechungsfrei mit Daten versorgt werden müssen, und ein ungepufferter Belichtungsprozess fehlschlägt, wenn der Rasterprozessor 1 nicht in der Lage ist, die Daten mit der geforderten Rate zu liefern.

Infolgedessen bleiben die Bebilderungseinheiten 4 solange untätig, wie der Rasterprozessor 1 arbeitet, und umgekehrt.

Da die Rasterdaten für jeden von den Bebilderungseinheiten zu erzeugenden Rasterpunkt dessen Größe spezifizieren müssen, enthalten sie eine wesentlich größere Datenmenge als die ursprünglich in den Rasterprozessor 1 eingegeben Rohdaten, bei denen es sich zum Beispiel um eine Datei im Postscript- oder PDF-Format handeln kann. Die Speicherung der Rasterdaten für den Fall, dass sie für einen späteren Druckauftrag erneut gebraucht werden, ist daher aufwendig. Zudem werden, wenn der Rasterprozessor 1 eine qualitativ hochwertige Kalibrierung durchführt, bei der Spezifikation der Rasterpunkte die Punktzuwächse der einzelnen Bebilderungseinheiten der verschiedenen Stufen der Druckmaschine berücksichtigt. Diese können aufgrund der Streuung der optischen Eigenschaften des Lasers und des verwendeten Abtastsystems in gewissen Grenzen von einer Bebilderungseinheit 4 zur anderen streuen. Infolgedessen erzeugt der Rasterprozessor 1 die Rasterdaten für eine gegebene Druckfarbe jeweils unter spezifischer Berücksichtigung der Eigenschaften der Bebilderungseinheit 4, die die Druckplatte für die betreffende Farbe belichtet. Wenn ein Druckauftrag anhand von gespeicherten Rasterdaten wiederholt werden soll, ist es folglich erforderlich, dass die Verteilung der Druckfarben auf die verschiedenen Stufen der Druckmaschine 5 bei der Wiederholung die gleiche ist, für die die Rasterdaten ursprünglich berechnet wurden. Wenn zwischenzeitlich Aufträge mit einer anderen Farbreihenfolge abgearbeitet worden sind, so würde dies ein langwieriges Waschen und Neueinfärben der Druckmaschine erforderlich machen. Für eine Wiederholung des Druckauftrags auf einer anderen Maschine ist immer eine erneute, auf die Bebilderungseinheiten der Maschine kalibrierte Rasterung erforderlich, selbst wenn die Maschinen baugleich sind und sich in allen anderen relevanten Parametern wie etwa Bedruckstoff, verwendeter Farbe, Plattenmaterial etc. gleichen.

Aufgabe der Erfindung ist, ein Verfahren zur Erzeugung von Rasterdaten für Bebilderungseinheiten einer Druckmaschine sowie ein Rastererzeugungssystem anzugeben, die eine weitere Beschleunigung der Arbeitsschritte von der Rohbildvorlage bis zum Druck ermöglichen.

Die Aufgabe wird zum einen gelöst durch ein Verfahren mit den Schritten:
(a) Zerlegen von Rohbilddaten in eine Mehrzahl von Teilbildern, die jeweils einer Druckfarbe entsprechen,
(b) Ausgeben der Teilbilder an eine Mehrzahl von Rasterprozessoren entsprechend der Anzahl der zu druckenden Farben,
(c) zeitgleiche Verarbeitung der Teilbilder zu Rasterdaten durch die Rasterprozessoren für die Ausgabe an jeweils eine der Bebilderungseinheiten.

Anstatt also für jeden Punkt eines zu druckenden Bildes der Reihe nach die Größen der Rasterpunkte der zu bedruckenden Farben zu bestimmen, wird hier zunächst eine Auftrennung in verschiedene Farben vorgenommen, und die Teilbilddaten, die jeweils einer Farbe entsprechen, werden von einem eigens dafür vorgesehenen Rasterprozessor verarbeitet, der so in der Lage ist, die Rasterdaten der zugeordneten Farbe wesentlich zügiger als bisher bereitzustellen.

Die für einen hochwertigen Druck erforderliche Kalibrierung der Teilbilder in Bezug auf den Punktzuwachs der Bebilderungseinheit wird vorzugsweise vom Rasterprozessor vorgenommen, der der Bebilderungseinheit zugeordnet ist. Die noch nicht gerasterten Teilbilder, die Dateien von relativ geringem Umfang bilden, können für eine Wiederholung des Druckauftrags bequem zwischengespeichert werden. Wenn der Druckauftrag wiederholt werden soll, werden die zwischengespeicherten Teilbilder von neuem gerastert. Falls sich zwischenzeitlich die Verteilung der Farben auf die Stufen der Druckmaschine geändert hat, oder eine andere Druckmaschine verwendet werden soll, kann die erneute Rasterung von einem anderen Rasterprozessor als die erste und auf den Punktzuwachs einer anderen Druckstufe kalibriert durchgeführt werden.

Das Zerlegen der Rohbilddaten in Teilbilder erfolgt vorzugsweise in einer von den Rasterprozessoren getrennten Vorverarbeitungseinheit. Diese Vorverarbeitungseinheit kann eine Kalibrierung im Bezug auf alle diejenigen Druckparameter vornehmen, die für die verschiedenen Stufen der Druckmaschine einheitlich sind, so etwa der verwendete Bedruckstoff, die Druckfarbe, der Gummituchzylinder oder das Plattenmaterial der Druckmaschine.

Ein besonderer Vorteil bei der Verwendung der Vorverarbeitungseinheit ist die Möglichkeit, das Zerlegen und Rastern zeitlich zu verzahnen, indem die Vorverarbeitungseinheit Teilbilddaten an die Rasterprozessoren ausgibt, bevor die vollständige Zerlegung der Rohbilddaten abgeschlossen ist.

Um einen gleichmäßigen Datenstrom mit der von der Bebilderungseinheit benötigten Rate gewährleisten zu können, werden die Rasterdaten vorzugsweise vor ihrer Ausgabe an die Bebilderungseinheit gepuffert. Ein solcher Puffer kann aber deutlich kleiner sein, als zum Speichern eines gesamten Teilbildes erforderlich. Wenn die Rechenleistung der Rasterprozessoren so groß ist, dass diese einen Strom von Rasterdaten mit der von der Bebilderungseinheit benötigten Rate garantieren können, kann der Puffer auch völlig entfallen.

Vorzugsweise umfasst die Zerlegung der Rohbilddaten auch einer Trapping-Prozedur.

Die Aufgabe wird ferner gelöst durch ein Rastererzeugungssystem für eine Druckmaschine, das eine Vorverarbeitungseinheit zum Empfang von Rohbilddaten und Zerlegen der Rohbilddaten in eine Mehrzahl von Teilbildern, die jeweils einer Druckfarbe entsprechen, und eine Mehrzahl von Rasterprozessoren zum Rastern jeweils eines der Teilbilder und zum Ausgeben der erhaltenene Teilbild-Rasterdaten an eine Bebilderungseinheit umfasst.

Die Erfindung wird nachfolgend anhand eines Ausführungsbeispiels erläutert.

Figur 2 zeigt ein Blockdiagramm eines Rastererzeugungssystems und einer daran angeschlossenen Druckmaschine zur Durchführung des erfindungsgemäßen Verfahrens.

Das System umfasst einen Vorprozessor 11, der eingerichtet ist, Rohbilddaten in einem gängigen elektronischen Format wie etwa einem Postscript- oder PDF-Format zu verarbeiten. Diese Dateien enthalten zum Beispiel Listen von Objekten mit definierter Gestalt, die durch diverse Parameter wie Größe, Lage im Bild, Farbwerte, etc. beschrieben werden. Die Vorverarbeitungseinheit 11 rechnet diese Rohbilddaten in "zweidimensionale Listen" um, die für jeden Punkt des zu druckenden Bildes den Tonwert der verschiedenen Druckfarben spezifizieren. Bei diesen Druckfarben handelt es sich meist um die Farben Schwarz, Cyan, Magenta, Gelb. In diesem Fall werden vier Listen erzeugt; es können aber auch sogenannte Spot- oder Schmuckfarben in den Rohbilddaten spezifiziert sein, für die jeweils eine eigene Liste erzeugt wird (zu deren Druck eine eigene Stufe der Druckmaschine erforderlich ist).

Diese Vorverarbeitung umfasst unter anderen einen Trapping-Schritt. In diesem Schritt werden Kanten von Farbflächen ermittelt, die durch Übereinanderdrucken mehrerer Farben erzeugt werden, und die Größe der Farbfläche einer Farbe, die mit geringer Dichte gedruckt werden soll, wird geringfügig verkleinert, um zu verhindern, dass bei einer nicht völlig exakten Ausrichtung der Farben zueinander in der Druckmaschine ein heller Rand aus dieser Farbe über den Rand der betreffenden Farbfläche übersteht.

Der Vorprozessor bildet zusammen mit einer Verwaltungseinheit 12 eine Vorverarbeitungseinheit. Die Verwaltungseinheit 12 liefert dem Vorprozessor 11 Information über die im Druck zu verwendenden Farben, den Bedruckstoff, Druckplattenmaterial, Gummituchzylinder, etc., das heißt über all diejenigen Parameter des Druckprozesses, die einen Einfluss auf die Farbwiedergabe haben können, aber nicht jeweils für eine Stufe der verwendeten Druckmaschine spezifisch sind. Der Vorprozessor 11 kann diese diversen Parameter direkt in die Berechnung der Listen einbeziehen und bereits dementsprechend fertig kalibrierte Listen an die Verwaltungseinheit 12 übergeben. Eine andere, bevorzugte Möglichkeit ist, dass der Vorprozessor 11 sich darauf beschränkt, aus den übermittelten Parametern einen Kalibrierdatensatz zu erzeugen, etwa in Form einer einzigen vereinheitlichten Kalibrierkurve, in der die Einflüsse der diversen relevanten Parameter zusammengefasst sind, und diesen Kalibrierdatensatz zusammen mit nicht kalibrierten Listen an Verwaltungseinheit 12 zu übergeben. Diese kann dann bereits damit beginnen, zuerst übergebene Teile der Listen mit Hilfe der Kalibrierdatensätze zu korrigieren, noch bevor die Vorverarbeitungseinheit 11 die Rohbilddaten vollständig in Teilbilder zerlegt hat.

Die getrennte Handhabung von Listen und Kalibrierdatensätzen gibt außerdem einem Drucker die Möglichkeit, die Kalibrierdatensätze zu editieren, beispielsweise an einem Computerterminal, und manuelle Korrekturen daran vorzunehmen, um das Druckergebnis zu optimieren oder spezielle Effekte einzuführen.

Die Verwaltungseinheit 12 leitet die anhand der Kalibrierdatensätze vorkalibrierten" Listen an jeweils einen aus einer Mehrzahl von Rasterprozessoren 13 weiter, die jeweils einer Bebilderungseinheit 4 der Druckmaschine 5 fest zugeordnet sind. Dabei erfasst die Verwaltungseinheit 12, mit welcher Farbe jede einzelne der Stufen der Druckmaschine 5 beschickt ist und leitet die Liste für die betreffende Farbe an den entsprechenden Rasterprozessor 13 weiter. Dieser führt eine zweite Kalibrierung der empfangenen Daten für den Punktzuwachs der angeschlossenen Bebilderungseinheit 4 aus und übergibt die Rasterdaten über einen Puffer 14 an die entsprechende Bebilderungseinheit 4. Die Punktzuwachskalibrierung läuft daher immer korrekt ab, ohne dass die Verwaltungseinheit 12 die Punktzuwachseigenschaften der Bebilderungseinheit zu kennen braucht, die zu einem gegebenen Zeitpunkt mit einer gegebenen Farbe beschickt ist. Die Gesamtgröße der Pufferspeicher 14 kann wesentlich geringer sein als die des herkömmlichen Pufferspeichers 3, da sie nicht mehr zum Speichern vollständiger Teilbilder sondern allenfalls zum Anpassen der Verarbeitungsrate der Rasterprozessoren an die von den Bebilderungseinheiten 4 benötigte Datenrate dienen.

Gegenüber dem System aus Figur 1 ergibt sich beim hier dargestellten System eine mehrfache Einsparung an Verarbeitungszeit. Von den mehreren Verarbeitungsstufen, die die Rohbilddaten im System von Figur 2 durchlaufen, muss lediglich die erste, die Erzeugung der Listen im Vorprozessor 11, abgeschlossen sein, bevor die weiteren Verarbeitungsschritte einsetzen können. Dies ist notwendig, weil die Reihenfolge des Auftretens von Bildelementen in den Rohbilddaten im Postscript Format nicht mit dem Ort zusammenhängen muss, an dem sich das betreffende Element im Bild befindet. Solange die Rohbilddaten nicht vollständig vom Vorprozessor 11 verarbeitet sind, besteht daher keine Gewissheit darüber, dass ein Wert in der an die Verwaltungseinheit 12 zu übergebenden Liste nicht noch geändert werden muss. Sobald die Listen vorliegen, können sie vom Vorprozessor 11 ausgegeben werden, wobei die Ausgabereihenfolge der Liste selbstverständlich der Belichtungsreihenfolge der Punkte in den Bebilderungseinheiten entspricht. Die Ausgabe der Listen an die Verwaltungseinheit kann zeitlich verschachtelt erfolgen, so dass die Ausgabe für alle Listen annähernd gleichzeitig beginnt und endet. Die von der Verwaltungseinheit 12 vorgenommene Vorkalibrierung folgt der vom Vorprozessor vorgegebenen Reihenfolge der Daten. Dementsprechend beginnt die Verwaltungseinheit 12 bei allen Rasterprozessoren 13 annähernd gleichzeitig, sie mit Teilbilddaten zu versorgen. Diese können daher mit der Punktzuwachskalibrierung und Rasterung beginnen, noch bevor die Ausgabe der Listen durch den Vorprozessor 11 vollständig abgeschlossen ist.

Wenn die Verarbeitungsgeschwindigkeit der Rasterprozessoren so groß ist, dass sie Rasterdaten mit der von den Bebilderungseinheiten benötigten Rate zur Verfügung stellen können, können die Rasterprozessoren 13 auch kurz nach Eintreffen der ersten Teilbilddaten beginnen, die Bebilderungseinheiten mit Daten zu versorgen. Falls die Verarbeitungsgeschwindigkeit der Rasterprozessoren 13 niedriger ist, wird zunächst ein Teil der Rasterdaten in den Puffern 14 zwischengespeichert, und die Ausgabe an die Bebilderungseinheiten wird eine Zeitlang verzögert. Die Verzögerungszeit kann so gewählt werden, dass auf jeden Fall vor Abschluss der Rasterung mit der Ausgabe an die Bebilderungseinheiten begonnen wird. Durch geschickte Wahl des Anfangszeitpunkts lässt sich erreichen, dass zu dem Zeitpunkt, zu dem die Rasterprozessoren die Rasterung beenden, der Puffer fast wieder entleert ist und die Ausgabe der Daten an die Bebilderungseinheiten nur mit einer unwesentlichen Verzögerung nach Ende der Rasterung endet. Durch diese mehrfache zeitliche Verzahnung der Verarbeitung lässt sich die Verarbeitungszeit von der Bildvorlage bis zur fertig belichteten Platte der Bebilderungseinheit erheblich abkürzen.

Es kann daher ökonomisch sein, Daten von Bildern, die für einen wiederholten Druck aufgehoben werden müssen, beispielsweise in Form von Listen, in Verbindung mit einem Kalibrierungsdatensatz oder in bereits vorkalibrierter Form, in einem Massespeicher 15 zu speichern. Wenn diese Bilder erneut gedruckt werden sollen, ordnet die Verwaltungseinheit die Listen entsprechend ihrer Farbe wieder zu verschiedenen Stufen der Druckmaschine zu, wobei die Zuordnung bei einer Wiederholung eines Druckvorgangs ohne weiteres an eine andere Stufe der Druckmaschine erfolgen kann als beim ersten Drucken. Dies kann nötig sein, falls die Verteilung der Druckfarben auf die verschiedenen Stufen der Druckmaschine zwischen den zwei Druckvorgängen geändert worden ist. Da die Punktzuwachskalibrierung für den wiederholten Druck von neuem und spezifisch für die jeweilige Bebilderungseinheit vorgenommen wird, kann mit dem wiederholten Druck das gleiche Qualitätsniveau wie mit dem ersten Druck erreicht werden, auch wenn sich zwischenzeitlich die Verteilung der Druckfarben auf die Stufen geändert hat.

### Bezugszeichenliste

- 1: Rasterprozessor
- 2: Verwaltungseinheit
- 3: Pufferspeichereinheit
- 4: Bebilderungseinheit
- 5: Druckmaschine
- 6 7 8 9 10 11: Vorverarbeitungseinheit
- 12: Verwaltungseinheit
- 13: Rasterprozessor
- 14: Puffer
- 15: Massenspeicher

## Patentansprüche

1. Verfahren zur Erzeugung von Rasterdaten für Bebilderungseinheiten (4) einer Druckmaschine (5) mit den Schritten:
(a) Zerlegen von Rohbilddaten in eine Mehrzahl von Teilbildern, die jeweils einer Druckfarbe entsprechend,
(b) Ausgeben der Teilbilder an eine Mehrzahl von Rasterprozessoren (13) entsprechend der Anzahl der zu druckenden Farben,
(c) zeitgleiche Verarbeitung der Teilbilder zu Rasterdaten durch die Rasterprozessoren (13) für die Ausgabe an jeweils eine der Bebilderungseinheiten (4).

2. Verfahren nach Anspruch 1,
**dadurch gekennzeichnet,**
dass jeder Rasterprozessor eine Kalibrierung der Teilbilder in Bezug auf den Punktzuwachs der Bebilderungseinheit (4) durchführt, der er zugeordnet ist.

3. Verfahren nach einem der Ansprüche 1 und 2,
**dadurch gekennzeichnet,**
dass das Zerlegen der Rohbilddaten in einer von den Rasterprozessoren (13) getrennten Vorverarbeitungseinheit (11,12) erfolgt.

4. Verfahren nach Anspruch 3,
**dadurch gekennzeichnet,**
dass die Vorverarbeitungseinheit (11,12) eine Kalibrierung in Bezug auf Eigenschaften des Bedruckstoffes und/oder der Druckfarbe und/oder des Gummituchzylinders und/oder des Plattenmaterials der Druckmaschine vornimmt.

5. Verfahren nach Anspruch 4,
**dadurch gekennzeichnet,**
dass die Vorverarbeitungseinheit (11,12) Teilbilddaten an die Rasterprozessoren ausgibt, bevor die Zerlegung der Rohbilddaten abgeschlossen ist.

6. Verfahren nach einem der vorhergehenden Ansprüche,
**dadurch gekennzeichnet,**
dass die Rasterdaten vor ihrer Ausgabe an die Bebilderungseinheit (4) gepuffert werden.

7. Verfahren nach einem der vorhergehenden Ansprüche,
**dadurch gekennzeichnet,**
dass der Schritt (a) eine Trapping-Prozedur umfasst.

8. Rastererzeugungssystem für eine Druckmaschine, Bebilderungseinheiten, insbesondere zur Durchführung des Verfahrens nach einem der vorhergehenden Ansprüche,
**dadurch gekennzeichnet,**
dass es eine Vorverarbeitungseinheit (11,12) zum Empfangen von Rohbilddaten und Zerlegen der Rohbilddaten in eine Mehrzahl von Teilbildern, die jeweils einer Druckfarbe entsprechen, und eine Mehrzahl von Rasterprozessoren (13) zum Rastern jeweils eines der Teilbilder und zum Ausgeben der erhaltenen Teilbild-Rasterdaten an eine Bebilderungseinheit (4) umfasst.
